# EUROPEAN PATENT APPLICATION

(11) **EP 4 807 866 A1**
(43) Date of publication of application: **16.09.2026**
(21) Application number: 26164083.3
(22) Date of filing: 11.03.2026
(51) Int. Cl.: H01M 50/179, H01M 50/188, H01M 50/383

(54) **BATTERY CELL**

(30) Priority: 12.03.2025 KR 20250032194
(71) Applicant: SK On Co., Ltd., Seoul 03161 (KR)
(72) Inventor: PARK, Kyung Tae, 34124 Daejeon (KR); KIM, Byung Mook, 34124 Daejeon (KR); NAM, Hai Sol, 34124 Daejeon (KR); RHO, Mi So, 34124 Daejeon (KR); PARK, Byeong Hyeon, 34124 Daejeon (KR); PARK, Jong Hun, 34124 Daejeon (KR); LEE, Yong Seok, 34124 Daejeon (KR); LEE, Hye Ryeon, 34124 Daejeon (KR); HUR, Yoo Jung, 34124 Daejeon (KR)
(74) Representative: Stolmár & Partner Patentanwälte PartG mbB

(57) **Abstract**

A battery cell includes an electrode assembly including a first electrode, a second electrode having a polarity opposite to that of the first electrode, and a separator configured to separate the first electrode from the second electrode, a case configured to accommodate the electrode assembly, a through-hole passing through one side of both sides of the case, a terminal part of which a portion is inserted into the through-hole and which is electrically connected to one of the first electrode and the second electrode, and a cover member that is in contact with one surface of the case and configured to surround the terminal part.

## Description

### BACKGROUND OF THE INVENTION

### 1. Field

The present disclosure relates to a secondary cell.

### 2. Description of the Related Art

In the case of a typical battery cell, since a gasket surrounding a terminal part extends from the inside to the outside of a case, when an ignition starts inside the battery cell, the gasket may be melted due to flame, and the flame may be ejected to the outside of the battery cell. Thus, it is necessary to prevent the flame from being ejected to the outside of the battery cell.

### SUMMARY OF THE INVENTION

First, according to an aspect of the present disclosure, an object of the present disclosure is to improve heat resistance of a battery cell.

Second, according to another aspect of the present disclosure, an object of the present disclosure is to improve structural stability of a battery cell.

Third, according to another aspect of the present disclosure, an object of the present disclosure is to improve reliability of a battery cell.

The present disclosure may be widely applied in fields of the electric vehicles, the battery charging stations, the energy storage systems (ESSs), and other green technologies such as the photovoltaics and the wind power utilizing batteries. In addition, the present disclosure may be used in eco-friendly mobility including electric vehicles and hybrid vehicles, in order to prevent a climate change by suppressing air pollution and greenhouse gas emission.

Embodiments of the present disclosure provide a battery cell including: an electrode assembly including a first electrode, a second electrode having a polarity opposite to that of the first electrode, and a separator configured to separate the first electrode from the second electrode; a case configured to accommodate the electrode assembly; a through-hole passing through one side of both sides of the case; a terminal part of which a portion is inserted into the through-hole and which is electrically connected to one of the first electrode and the second electrode; and a cover member that is in contact with one surface of the case and configured to surround the terminal part.

In an embodiment, the cover member may include a metal.

In an embodiment, the cover member may include a heat-resistant polymer.

In an embodiment, the cover member may be spaced apart from the terminal part in a radial direction of a central axis with respect to the central axis of the through-hole.

In an embodiment, the cover member may have a ring shape.

In an embodiment, the battery cell may further include a first gasket inserted into the through-hole and disposed between the terminal part and the case.

In an embodiment, the cover member may be in contact with an inner surface of the case.

In an embodiment, a maximum height of the cover member in the axial direction of the through-hole may be greater than or equal to a maximum distance from the inner surface of the case to the first gasket disposed inside the case in the axial direction of the through-hole.

In an embodiment, the battery cell may further include a second gasket disposed between the cover member and the terminal part in a radial direction of a central axis of the through-hole.

In an embodiment, the second gasket may have a ring shape.

In an embodiment, the second gasket may have an outer diameter greater than an inner diameter of the through-hole.

In an embodiment, the second gasket may include an electrically insulating material.

In an embodiment, the second gasket may include a heat-resistant polymer.

In an embodiment, the battery cell may further include: a current collector configured to electrically connect the electrode assembly to the terminal part; and an insulating cover disposed between the current collector and the inner surface of the case.

In an embodiment, a maximum height of the cover member in the axial direction of the through-hole may be less than or equal to a distance between the inner surface of the case and the insulating cover in the axial direction of the through-hole.

In an embodiment, an inner circumferential surface of the cover member may have a height greater than that of an outer circumferential surface of the cover member.

In an embodiment, the cover member may be in contact with an outer surface of the case.

In an embodiment, a maximum height of the cover member in the axial direction of the through-hole may be less than or equal to a maximum distance from the outer surface of the case to the terminal part disposed outside the case in the axial direction of the through-hole.

### BRIEF DESCRIPTION OF THE DRAWINGS

FIG. 1 is a view illustrating an example of a battery cell according to the present disclosure.
FIG. 2 is a view illustrating an example of an electrode assembly according to the present disclosure.
FIG. 3 is a schematic view illustrating a portion of one cross-section of the battery cell according to the present disclosure.
FIG. 4 is a view illustrating another embodiment of FIG. 3.
FIG. 5 is a view illustrating further another embodiment of FIG. 3.
FIG. 6 is a view illustrating further another embodiment of FIG. 3.
FIG. 7 is a view illustrating another embodiment of FIG. 6.

### DETAILED DESCRIPTION

Preferred embodiments of the present disclosure will be described below in more detail with reference to the accompanying drawings. A configuration or control method of the device described below is only for explaining embodiments of the present disclosure and is not intended to limit the scope of the present disclosure, and the same reference numbers used throughout the specification indicate the same components.

In the present disclosure, the term "battery cell" may have the same meaning as that of a secondary battery, a cell, or a battery.

In the present disclosure, the "battery system" may refer to any one of a battery module, a battery pack, and an energy storage system (ESS), which include at least one battery stack provided by grouping a plurality of battery cells.

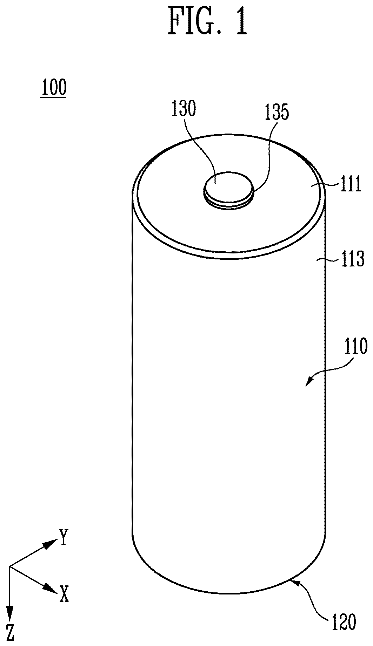

FIG. 1 is a view illustrating an example of a battery cell according to the present disclosure.

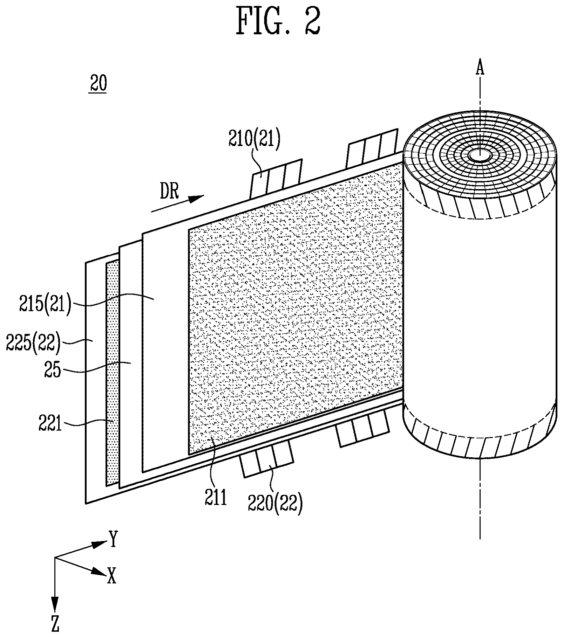

Referring to FIG. 1, a battery cell 100 according to the present disclosure may include an electrode assembly 20 (see FIG. 2) including a first electrode 21 (see FIG. 2), a second electrode 22 having a polarity opposite to that of the first electrode 21, and a separator 25 (see FIG. 2) separating the first electrode 21 from the second electrode 22, a case 110 (or can) accommodating the electrode assembly 20, a through-hole HL passing through one side of both sides of the case 110, a terminal part 130, which is partially inserted into the through-hole HL and electrically connected to one of the first electrode 21 and the second electrode 22, and a cover member 300 that is in contact with one surface of the case 110 and surrounds the terminal part 130.

The battery cell 100 according to the present disclosure may be a secondary battery capable of being charged and discharged several times. For example, the secondary battery may be one of a lithium cobalt battery, a lithium nickel battery, a lithium iron phosphate battery, a lithium ion battery, a lithium polymer battery, a lithium sulfur battery, a nickel hydrogen battery, a nickel cadmium battery, a sodium battery, and an all-solid-state battery, but is not limited thereto, and may be modified into various types of secondary batteries.

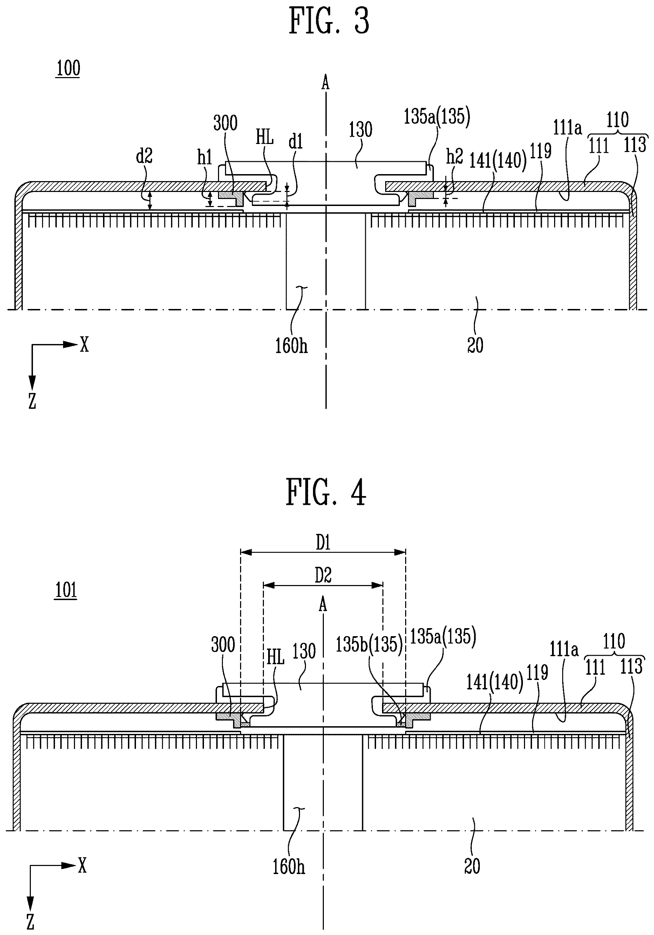

The case 110 may accommodate the electrode assembly 20. In addition, the case 110 may accommodate a current collector 140 (see FIG. 3) that is electrically connected to the electrode assembly 20.

The case 110 may include an accommodation body 113 having an opening (not shown) with one end opened, and a cap plate 120 coupled to the accommodation body 113 to cover the opening.

In addition, the battery cell 100 according to the present disclosure may further include the current collector 140 (see FIG. 3), which is provided inside the case 110 and electrically connected to the electrode assembly 20.

For example, the case 110 may have a shape of a container of which a portion is opened. In an embodiment, the case 110 may be made of iron, a metal such as aluminum, an alloy including iron or aluminum, or a material such as plastic, ceramic, or carbon.

In an embodiment, the case 110 may include a planar part 111 facing the opening. That is, the planar part 111 may face a cap plate 120. The planar part 111 may provide the other end of both ends of the accommodation body 113. The opening may be defined in one end of the accommodation body 113, but the other end of the accommodation body may be blocked by the planar part 111.

For example, the case 110 may be molded into a cup shape by pressing a cylindrical disk at a certain pressure. This may be referred to as deep drawing.

At least a portion of the planar part 111 may be provided as a flat surface having no height change in a horizontal direction (e.g., X-axis direction, Y-axis direction). A shape of the planar part 111 in an XY plane may be circular, but this is not limited thereto, and the shape may be modified into an elliptical, triangular, quadrilateral, polygonal, etc.

An outer circumferential surface of the accommodation body 113 may extend in a height direction (e.g., Z-axis direction) around the planar part 111. In an embodiment, the accommodation body 113 may be integrally formed. That is, the planar part 111 and the outer circumferential surface of the accommodation body 113 may be integrally formed.

In an embodiment, in order to couple the cap plate 120 to the accommodation body 113, the accommodation body 113 may include a beading part (not shown) provided by recessing a portion of the outer circumferential surface of the accommodation body 113 along a circumference of the outer circumferential surface of the accommodation body 113.

For example, the electrode assembly 20 and the current collector 140 may be inserted into the inner space of the case 110 through the opening. Thereafter, the beading part may be disposed on an area of the accommodation body 113, which is adjacent to the opening.

The cap plate 120 may seal the case 110. In an embodiment, after the electrode assembly 20 and the current collector 140 are accommodated in the inner space of the case 110, the cap plate 120 may be coupled to the case 110. That is, the case 110 and the cap plate 120 may surround the electrode assembly 20 and the outer side of the current collector 140.

In an embodiment, the shape of the cap plate 120 and the case 110 that are coupled to each other may be cylindrical. Although an example in which the case 110 has a cylindrical shape is illustrated in the present disclosure, this is merely one example. The shape of the cap plate 120 and the case 110, which are coupled to each other, may be modified into various shapes such as a rectangular or a hexahedral shape.

In an embodiment, the cap plate 120 may be located at an opposite side of the planar part 111. For example, when the planar part 111 is disposed on an upper end of the accommodation body 113, the cap plate 120 may be coupled to a lower end of the accommodation body 113.

The battery cell 100 may further include a terminal part 130 having either positive or negative electrical polarity of positive and negative electrodes. In addition, the battery cell 100 may further include a gasket part 135 that electrically insulates the terminal part 130 from the case 110.

In an embodiment, the terminal part 130 may be disposed at an opposite side of the cap plate 120 in the height direction (e.g., the Z-axis direction). The terminal part 130 may be electrically connected to the electrode assembly 20 to protrude to the outside of the case 110. The terminal part 130 may be electrically connected to an external device. That is, current may flow to the external device through the terminal part 130.

In an embodiment, the terminal part 130 may be inserted into the through-hole HL (see FIG. 3) that passes through one side of both sides of the case 110. In an embodiment, the terminal part 130 may be a rivet. In an embodiment, the through-hole HL may be defined in the planar part 111. For example, the through-hole HL may be defined by passing through a center of the planar part 111.

In an embodiment, the gasket part 135 may be inserted into the through-hole HL and disposed between the case 110 and the terminal part 130. For example, the gasket part 135 may be disposed between the planar part 111 and the terminal part 130. The gasket part 135 may include an electrically insulating material. The term "insulating material" refers to a material having low electrical conductivity. For example, the insulating material may be one of a polymer and ceramic, or a combination thereof.

FIG. 2 is a view illustrating an example of the electrode assembly according to the present disclosure.

The electrode assembly 20 according to the present disclosure may include a first electrode 21, a second electrode 22, and a separator 25 disposed between the first electrode 21 and the second electrode 22.

The first electrode 21 may have one of the positive and negative electrical polarities, and the second electrode 22 may have the other remaining electrical polarity. The separator 25 may be provided to electrically separate the first electrode 21 from the second electrode 22. That is, the separator 25 may electrically separate the first electrode 21 from the second electrode 22. In addition, the separator 25 may surround the outermost portion of the wound electrode assembly 20 to electrically separate the electrode assembly 20 from the case 110.

In detail, the first electrode 21 may include a first electrode plate 215 including a first coating area 211 on which one of a positive electrode active material or a negative electrode active material is stacked, and a first flag part 210 provided allowing a portion of the first electrode plate 215 to extend along an edge of the first electrode plate 215.

The second electrode 22 may include a second electrode plate 225 including a second coating area 221 on which one of the positive electrode active material or the negative electrode active material is stacked, and a second flag part 220 that extends from a portion of the second electrode plate 225 along an edge of the second electrode plate 225 in a direction opposite to the extension direction of the first flag part 210 and is bent in a direction away from a central area 160h of the electrode assembly 20.

In addition, the electrode assembly 20 may include the separator 25 that is stacked between the first electrode 21 and the second electrode 22. For this, the separator 25 may be made of an insulating material.

The active material applied on the first electrode 21 may be referred to as a first active material, and the active material applied on the second electrode 22 may be referred to as a second active material. The first active material and the second active material may have electrically different polarities, respectively.

A portion of the first electrode 21 other than the first coating area 211 may be referred to as a first uncoated portion. That is, the first uncoated portion may include an area (or an area on which the first active material is not applied) through which the first electrode plate 215 of the first flag part 210 and the first electrode plate 215 is exposed to the outside.

Likewise, a portion of the second electrode 22 other than the second coating area 221 may be referred to as a second uncoated portion. That is, the second uncoated portion may include an area (or an area on which the second active material is not applied) through which the second electrode plate 225 of the second flag part 220 and the second electrode plate 225 is exposed to the outside.

That is, the first uncoated portion and the second uncoated portion may refer to areas on which each metal material forming each of the first electrode plate 215 and the second electrode plate 225 is directly exposed to air or an electrolyte.

The reason why the first uncoated portion includes the area adjacent to the first flag part 210 on the first electrode plate 215 is to prevent the first active material from being separated from the first electrode plate 215 during the formation of the first flag part 210, and to facilitate folding of the first flag part 210.

Likewise, the reason why the second uncoated portion includes the area adjacent to the second flag part 220 on the second electrode plate 225 is to prevent the second active material from being separated from the second electrode plate 225 during the formation of the second flag part 220, and to facilitate folding of the second flag part 220.

The first flag part 210 and the second flag part 220 may protrude in different directions. This is to prevent short circuit between the first flag part 210 and the second flag part 220.

When the first flag part 210 extends toward one end of the case 110 in the height direction (along the Z direction), the second flag part 220 may extend in a direction opposite to the extension direction of the first flag part 210.

FIG. 2 illustrates an example in which each of the first electrode 21, the second electrode 22, and the separator 25 is provided as a single sheet and then rolled like a scroll. Alternatively, the first electrode 21, the second electrode 22, and the separator 25 may be sequentially stacked (or laminated) several times and then bent into a shape corresponding to the shape of the case 110.

For convenience of description in the present disclosure, when the electrode assembly 20 is wound in the roll shape, a direction in which one edge of the electrode assembly 20 moves toward a winding axis A (or a central area 160h, see FIG. 3) along the outermost end of the electrode assembly 20 is referred to as a winding direction DR.

That is, the first electrode 21, the second electrode 22, and the separator 25 may be stacked and then be wound in the roll shape along the winding direction.

That is, the first electrode 21 may be wound in the roll shape along the winding direction. The same may be applied to the second electrode 22 and the separator 25.

In addition, in the present disclosure, a radial direction has been defined for illustrative purposes. That is, considering that the shape of the through-hole HL is cylindrical, similar to a cylindrical coordinate system, a direction along a virtual extension line extending outward at a predetermined angle with respect to the central axis A, which is a virtual axis of the through-hole HL, was defined as the radial direction.

FIG. 3 is a schematic view illustrating a portion of one cross-section of the battery cell according to the present disclosure.

Referring to FIGS. 1 and 3, the battery cell 100 according to the present disclosure may include the current collector 140 and the electrode assembly 20 inside the case 110.

The electrode assembly 20 may be wound along the virtual central axis A. The central axis A of the electrode assembly 20 may be disposed on the central area 160h of the electrode assembly 20. The central area 160h may have a hole shape. The central area 160h may be provided to prevent damage to the first electrode 21 (see FIG. 2) and/or the second electrode 22 (see FIG. 2) due to a large curvature when the electrode assembly 20 is wound.

The battery cell 100 according to the present disclosure may further include an electrolyte inside the case 110. The electrolyte may be a medium that transfers ions or current, for example, between the first electrode 21 and the second electrode 22.

Referring to FIG. 3, the battery cell 100 according to the present disclosure may further include the current collector 140 that electrically connects the electrode assembly 20 to the terminal part 130. The current collector 140 may be disposed inside the case 110 to electrically connect the electrode assembly 20 to the outside.

The current collector 140 may include at least one of a first current collector 141 or a second current collector (not shown).

The first current collector 141 may be disposed between the planar part 111 and the electrode assembly 20 to electrically connect the terminal part 130 to the electrode assembly 20.

To electrically insulate the terminal part 130 from the planar part 111, the battery cell 100 according to the present disclosure may further include a gasket part 135 that surrounds a circumference of the terminal part 130 and is disposed between the terminal part 130 and the planar part 111. In an embodiment, the gasket part 135 may include one gasket 135a.

In contrast, the second current collector may be disposed between the cap plate 120 (see FIG. 1) and the electrode assembly 20 to electrically connect the cap plate 120 to the electrode assembly 20. That is, the first current collector 141 and the second current collector may be electrically connected to different electrodes of the electrode assembly 20, respectively.

For example, the first current collector 141 may be connected to the first electrode 21, and the second current collector may be connected to the second electrode 22. That is, the first current collector 141 may be connected to the first flag part 210, and the second current collector may be connected to the second flag part 220.

In an embodiment, the first current collector 141 may be electrically connected to the terminal part 130, and the second current collector may be electrically connected to the case 110 and/or the cap plate 120.

Thus, the first current collector 141 may be disposed between the electrode assembly 20 and the planar part 111. The second current collector may be disposed between the electrode assembly 20 and the cap plate 120.

For the electrical connection, the current collector 140 may include a conductive material such as copper, gold, silver, aluminum, and a conductive polymer.

In addition, the battery cell 100 according to the present disclosure may further include an insulating cover 119 disposed between the current collector 140 and an inner surface 111a of the case 110. The insulating cover 119 may electrically insulate the first current collector 141 from the case 110 or the planar part 111. The insulating cover 119 may have a disc shape that includes an insulating through-hole passing through a position corresponding to the central area 160h.

To electrically connect the first flag part 210 (see FIG. 2) to the first current collector 141, the first flag part 210 and the first current collector 141 may be coupled to each other by welding. Likewise, the second flag part 220 (see FIG. 2) and the second current collector may be coupled to each other by welding.

That is, the first flag part 210 may be electrically connected to the terminal part (or terminal, 130) through the first current collector 141 to supply electrical energy generated in the electrode assembly 20 to the outside or store the electrical energy in the electrode assembly 20.

Likewise, the second flag part 220 may be electrically connected to the outside as well as to the case 110 and/or the cap plate 120 through the second current collector.

The battery cell 100 according to the present disclosure may include a cover member 300 that is in contact with one surface of the case 110 inside the case 110 to surround the terminal part 130. The cover member 300 may be bonded to one surface of the case 110 to prevent flame from being ejected through the gasket 135a when fire occurs inside the case 110.

In an embodiment, the cover member 300 may include a metal. In an embodiment, the cover member 300 may include the same material as the case 110. For example, the cover member 300 may include carbon steel, nickel plated steel, etc. That is, the cover member 300 may be made of a material with high heat resistance to prevent the emission of the flame. In addition, since the cover member 300 includes the metal, the cover member 300 may have the same polarity as the case 110 that is in contact with the cover member 300 and may have a different polarity from that of the terminal part 130. In another embodiment, the cover member 300 may include a heat-resistant polymer. However, embodiments are not limited thereto.

In an embodiment, the cover member 300 may be spaced apart from the terminal part 130 in the radial direction of the central axis A with respect to the central axis A of the through-hole HL. The cover member 300 may surround the terminal part 130 and the gasket 135a along the radial direction of the central axis A. In an embodiment, the cover member 300 may have a ring shape. The ring shape of the cover member 300 may include a hole that passes through a position corresponding to the central area 160h to expose the terminal part 130 and the gasket 135a. The cover member 300 may surround the terminal part 130 and the gasket 135a to prevent the flame from being ejected to the outside through the gasket 135a adjacent to the terminal part 130.

In an embodiment, a height h1 of an inner circumferential surface of the cover member 300 may be greater than a height h2 of an outer circumferential surface of the cover member 300. Here, the height h1 of the inner circumferential surface of the cover member 300 may be a maximum height h1 of the cover member 300. A cross-sectional shape of the cover member 300 may be a stepped cross-sectional shape. For example, the cross-sectional shape of the cover member 300 may be an L shape.

In an embodiment, the cover member 300 may be in contact with the inner surface 111a of the case 110. In detail, the cover member 300 may be disposed on the inner surface 111a of the planar part 111 inside the case 110. That is, the cover member 300 may protrude from the inner surface 111a of the planar part 111 toward the current collector 140.

In an embodiment, the maximum height h1 of the cover member 300 in the axial direction A of the through-hole HL may be equal to or greater than a maximum distance d1 from the inner surface 111a of the case 110 to the gasket 135a disposed inside the case 110 in the axial direction A of the through-hole HL. That is, the cover member 300 may entirely cover the gasket 135a disposed inside the case 110 in the radial direction. As a result, when the flame moves from the accommodation body 113 toward the central area 160h inside the case 110, the cover member 300 may protect the gasket 135a from the flame.

In an embodiment, the maximum height h1 of the cover member 300 in the axial direction A of the through-hole HL may be equal to or less than a distance d2 between the inner surface 111a of the case 110 and the insulating cover 119 in the axial direction A of the through-hole HL. That is, the cover member 300 protruding from the inner surface 111a of the case 110 may not be in contact with the insulating cover 119. When the maximum height h1 of the cover member 300 in the axial direction A of the through-hole HL is greater than the distance d2 between the inner surface 111a of the case 110 and the insulating cover 119 in the axial direction A of the through-hole HL, an interference may occur between the cover member 300 and the insulating cover 119 to damage the insulating cover 119.

In an embodiment, since the battery cell 100 further includes the cover member 300 that surrounds the gasket 135a and the terminal part 130 in the radial direction, the emission of the flame along the gasket 135a and the terminal part 130 may be prevented through the cover member 300. That is, when the flame is ejected from inside the battery cell 100, the cover member 300 may prevent the flame from being ejected to the outside through the gasket 135a and the terminal part 130, and the flame may move to a flame ejection hole (not shown). Thus, the structural stability of the battery cell 100 may be improved.

FIG. 4 is a view illustrating another embodiment of FIG. 3. A battery cell 101 according to an embodiment of FIG. 4 may be substantially the same as the battery cell 100 according to the embodiment of FIG. 3, except for an absence of the second gasket 135b. Thus, duplicated descriptions may be omitted.

Referring to FIGS. 1 and 4, the gasket part 135 of the battery cell 101 according to the present disclosure may include two gaskets 135a and 135b. That is, the gasket part 135 may include a first gasket 135a and a second gasket 135b.

The first gasket 135a may be inserted into the through-hole HL and disposed between the terminal part 130 and the case 110. The second gasket 135b may be disposed between the cover member 300 and the terminal part 130 in the radial direction of the central axis A of the through-hole HL. In addition, the second gasket 135b may be disposed between the first gasket 135a and the current collector 140. Thus, the second gasket 135b may cover a lower portion of the first gasket 135a. The second gasket 135b may cover the lower portion of the first gasket 135a between the terminal part 130 and the cover member 300 to prevent the flame from being ejected to the outside through the first gasket 135a.

In an embodiment, the second gasket 135b may have a ring shape. The ring shape of the second gasket 135b may include a hole that passes through a position corresponding to the central area 160h to expose the terminal part 130.

A diameter of the terminal part 130 disposed inside the case 110 may be larger than an inner diameter D2 of the through-hole HL. Thus, an outer diameter D1 of the second gasket 135b surrounding the terminal part 130 may be greater than the inner diameter D2 of the through-hole HL.

In an embodiment, the second gasket 135b may include an electrically insulating material. The term "insulating material" refers to a material having low electrical conductivity. For example, the insulating material may be one of a polymer and ceramic, or a combination thereof. Thus, even if the second gasket 135b is in contact with both the cover member 300 and the terminal part 130 having different polarities, the short circuit may not occur.

In an embodiment, the second gasket 135b may include a heat-resistant polymer. That is, since the second gasket 135b includes a polymer with improved heat resistance, the flame directed toward the first gasket 135a may be blocked to prevent the flame from being ejected. For example, the second gasket 135b may include at least one of polytetrafluoroethylene (PTFE), polypropylene (PP), or polyethylene (PE).

In an embodiment, since the battery cell 101 further includes the second gasket 135b in addition to the cover member 300, the emission of the flame along the first gasket 135a and the terminal part 130 may be prevented through the cover member 300 and the second gasket 135b. Thus, the structural stability of the battery cell 101 may be further improved.

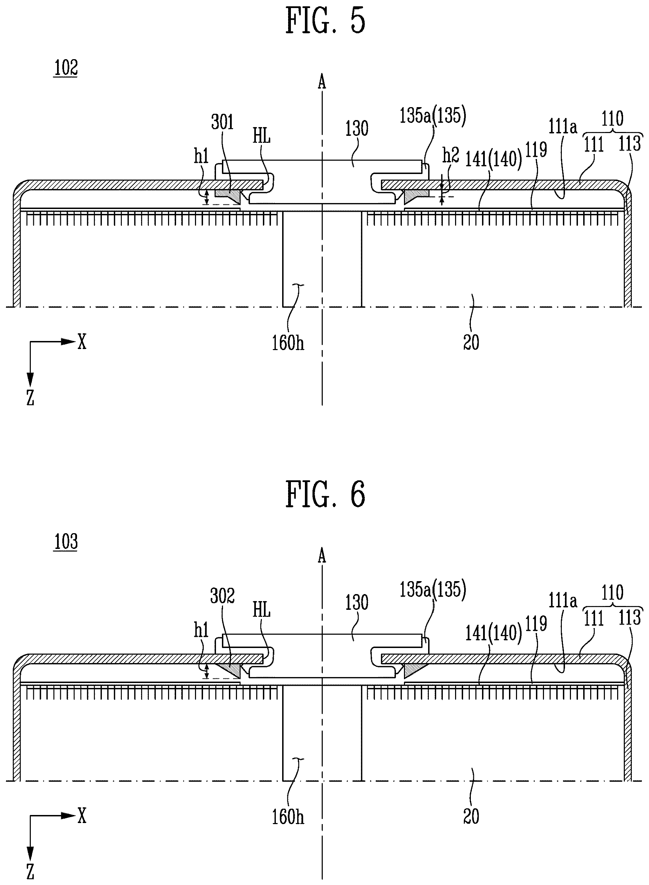

FIG. 5 is a view illustrating further another embodiment of FIG. 3. A battery cell 102 according to an embodiment of FIG. 5 may be substantially the same as the battery cell 100 according to the embodiment of FIG. 3, except for the shape of the cover member 301. Thus, duplicated descriptions may be omitted.

In an embodiment, a height h1 of an inner circumferential surface of the cover member 301 may be greater than a height h2 of an outer circumferential surface of the cover member 301. That is, the height h1 of the inner circumferential surface of the cover member 301 may be a maximum height h1 of the cover member 301.

For example, a cross-sectional shape of the cover member 301 may be a shape that is partial stepped and inclined. That is, a portion of the cover member 301 may include a flat surface, and a remaining portion may include an inclined surface.

FIG. 6 is a view illustrating further another embodiment of FIG. 3. A battery cell 103 according to an embodiment of FIG. 6 may be substantially the same as the battery cell 100 according to the embodiment of FIG. 3, except for the shape of the cover member 302. Thus, duplicated descriptions may be omitted.

In an embodiment, the cover member 302 may include an inclined surface having an overall inclination. For example, a cross-sectional shape of the cover member 302 may be triangular. Thus, an inner circumferential surface and an outer circumferential surface of the cover member 302 may be in contact with each other, and a height h1 of the inner circumferential surface of the cover member 302 may be a maximum height h1 of the cover member 302.

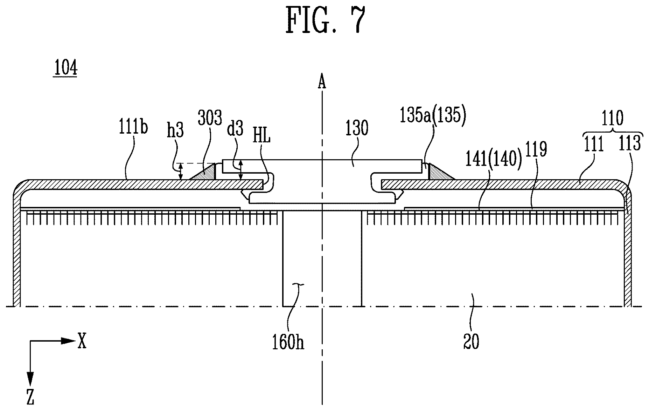

FIG. 7 is a view illustrating another embodiment of FIG. 6. A battery cell 104 according to an embodiment of FIG. 7 may be substantially the same as the battery cell 103 according to the embodiment of FIG. 6, except for an arrangement position of the cover member 303. Thus, duplicated descriptions may be omitted.

In an embodiment, the cover member 303 may be in contact with an outer surface 111b of the case 110. In detail, the cover member 303 may be disposed on the outer surface 111b of the planar part 111 outside the case 110. That is, the cover member 303 may protrude in a direction away from the current collector 140 from the outer surface 111b of the planar part 111. Here, the cover member 303 may overlap the gasket 135a and the terminal part 130, which are disposed outside the case 110 in the radial direction. Thus, the cover member 303 may prevent the flame from being ejected to the outside through the gasket 135a from the outside of the case 110.

In an embodiment, a maximum height h3 of the cover member 303 in the axial direction A of the through-hole HL may be equal to or less than a maximum distance d3 from the outer surface 111b of the case 110 to the terminal part 130 disposed outside the case 110 in the axial direction A of the through-hole HL. When the maximum height h3 of the cover member 303 in the axial direction A of the through-hole HL is greater than the maximum distance d3 from the outer surface 111b of the case 110 to the terminal part 130 disposed outside the case 110 in the axial direction A of the through-hole HL, the cover member 303 may protrude from the terminal part 130. Thus, an interference may occur when welding a busbar to the terminal part 130 and the case 110, and thus, the busbar may not be properly welded.

First, according to an embodiment of the present disclosure, the heat resistance of the battery cell may be improved.

Second, according to another embodiment of the present disclosure, the structural stability of the battery cell may be improved.

Third, according to further another embodiment of the present disclosure, the reliability of the battery cell may be improved.

It is understood by those skilled in the art that the plurality of exemplary embodiments described above are specific examples of the following aspects.

Aspect 1. A battery cell comprising: an electrode assembly comprising a first electrode, a second electrode having a polarity opposite to that of the first electrode, and a separator configured to separate the first electrode from the second electrode; a case configured to accommodate the electrode assembly; a through-hole passing through one side of both sides of the case; a terminal part of which a portion is inserted into the through-hole and which is electrically connected to one of the first electrode and the second electrode; and a cover member that is in contact with one surface of the case and configured to surround the terminal part.

Aspect 2. The battery cell of aspect 1, wherein the cover member comprises a metal.

Aspect 3. The battery cell of aspect 1 or 2, wherein the cover member comprises a heat-resistant polymer, optionally wherein the cover member is spaced apart from the terminal part in a radial direction of a central axis with respect to the central axis of the through-hole.

Aspect 4. The battery cell according to any one of the previous aspects, wherein the cover member has a ring shape.

Aspect 5. The battery cell according to any one of the previous aspects, further comprising a first gasket inserted into the through-hole and disposed between the terminal part and the case.

Aspect 6. The battery cell of aspect 5, wherein the cover member is in contact with an inner surface of the case.

Aspect 7. The battery cell of aspect 6, wherein a maximum height of the cover member in the axial direction of the through-hole is greater than or equal to a maximum distance from the inner surface of the case to the first gasket disposed inside the case in the axial direction of the through-hole.

Aspect 8. The battery cell of aspect 7, further comprising a second gasket disposed between the cover member and the terminal part in a radial direction of a central axis of the through-hole.

Aspect 9. The battery cell of aspect 8, wherein the second gasket has a ring shape,
optionally wherein the second gasket has an outer diameter greater than an inner diameter of the through-hole.

Aspect 10. The battery cell of aspect 8 or 9, wherein the second gasket comprises an electrically insulating material, optionally wherein the second gasket comprises a heat-resistant polymer.

Aspect 11. The battery cell according to any one of the aspects 6 to 10, further comprising: a current collector configured to electrically connect the electrode assembly to the terminal part; and an insulating cover disposed between the current collector and the inner surface of the case.

Aspect 12. The battery cell of aspect 11, wherein a maximum height of the cover member in the axial direction of the through-hole is less than or equal to a distance between the inner surface of the case and the insulating cover in the axial direction of the through-hole.

Aspect 13. The battery cell according to any one of the aspects 6 to 10, wherein an inner circumferential surface of the cover member has a height greater than that of an outer circumferential surface of the cover member.

Aspect 14. The battery cell of the aspect 6, wherein the cover member is in contact with an outer surface of the case.

Aspect 15. The battery cell of aspect 14, wherein a maximum height of the cover member in the axial direction of the through-hole is less than or equal to a maximum distance from the outer surface of the case to the terminal part disposed outside the case in the axial direction of the through-hole.

The present disclosure may be modified in various forms, and thus the scope of the present disclosure is not limited to the above-described embodiments. Therefore, if the modified embodiment includes the components of the claims of the present disclosure, it should be considered to fall within the scope of the claims of the present disclosure.

## Claims

1. A battery cell comprising:
an electrode assembly comprising a first electrode, a second electrode having a polarity opposite to that of the first electrode, and a separator configured to separate the first electrode from the second electrode;
a case configured to accommodate the electrode assembly;
a through-hole passing through one side of both sides of the case;
a terminal part of which a portion is inserted into the through-hole and which is electrically connected to one of the first electrode and the second electrode; and
a cover member that is in contact with one surface of the case and configured to surround the terminal part.

2. The battery cell of claim 1, wherein the cover member comprises a metal.

3. The battery cell of claim 1 or 2, wherein the cover member comprises a heat-resistant polymer,
optionally wherein the cover member is spaced apart from the terminal part in a radial direction of a central axis with respect to the central axis of the through-hole.

4. The battery cell according to any one of the previous claims, wherein the cover member has a ring shape.

5. The battery cell according to any one of the previous claims, further comprising a first gasket inserted into the through-hole and disposed between the terminal part and the case.

6. The battery cell of claim 5, wherein the cover member is in contact with an inner surface of the case.

7. The battery cell of claim 6, wherein a maximum height of the cover member in the axial direction of the through-hole is greater than or equal to a maximum distance from the inner surface of the case to the first gasket disposed inside the case in the axial direction of the through-hole.

8. The battery cell of claim 7, further comprising a second gasket disposed between the cover member and the terminal part in a radial direction of a central axis of the through-hole.

9. The battery cell of claim 8, wherein the second gasket has a ring shape,
optionally wherein the second gasket has an outer diameter greater than an inner diameter of the through-hole.

10. The battery cell of claim 8 or 9, wherein the second gasket comprises an electrically insulating material,
optionally wherein the second gasket comprises a heat-resistant polymer.

11. The battery cell according to any one of the claims 6 to 10, further comprising:
a current collector configured to electrically connect the electrode assembly to the terminal part; and
an insulating cover disposed between the current collector and the inner surface of the case.

12. The battery cell of claim 11, wherein a maximum height of the cover member in the axial direction of the through-hole is less than or equal to a distance between the inner surface of the case and the insulating cover in the axial direction of the through-hole.

13. The battery cell according to any one of the claims 6 to 10, wherein an inner circumferential surface of the cover member has a height greater than that of an outer circumferential surface of the cover member.

14. The battery cell of claim 6, wherein the cover member is in contact with an outer surface of the case.

15. The battery cell of claim 14, wherein a maximum height of the cover member in the axial direction of the through-hole is less than or equal to a maximum distance from the outer surface of the case to the terminal part disposed outside the case in the axial direction of the through-hole.
